# EUROPÄISCHE PATENTANMELDUNG

(11) **EP 2 062 712 A1**
(43) Veröffentlichungstag der Anmeldung: **27.05.2009**
(21) Anmeldenummer: 08169229.5
(22) Anmeldetag: 17.11.2008
(51) Int. Cl.: B29C 45/14

(54) **Verfahren zur Herstellung eines mit einem Papieretikett versehenen Kunststoffspritzgießteils**

(30) Priorität: 26.11.2007 DE 102007057112
(71) Anmelder: Engelhardt-Druck GmbH, 86720 Nördlingen (DE)
(72) Erfinder: Reinhardt, Ralf, Dr., 86720 Nördlingen (DE); Tischinger, Lothar, 86757 Munzingen (DE)
(74) Vertreter: Cremer, Ulrike Theresia

(57) **Zusammenfassung**

Die Erfindung betrifft ein Verfahren zur Herstellung eines mit einem Papieretikett versehenen Kunststoffspritzgießteils, wobei das In-Mould-Verfahren angewendet wird. Erfindungsgemäß ist das in eine Spritzgießform eingelegte Papieretikett feucht und wird im feuchten Zustand mit Kunststoff hinterspritzt.

## Beschreibung

Die vorliegende Erfindung betrifft ein Verfahren zur Herstellung eines mit einem Papieretikett versehenen Kunststoffspritzgießteils, wobei das In-Mould-Verfahren angewendet wird.

Zum Etikettieren in der Spritzgussform eignen sich zwei Substrate besonders, Kunststofffolie und Papier. Häufig wird Kunststoff gewählt, obwohl ein vergleichbares Etikett auf Basis von Papier unter ökologischen, ökonomischen als auch - je nach Behälter und Anwendung - qualitativen Gesichtspunkten zumindest gleichwertig wäre. Für Kunststoff spricht die Gutmütigkeit im Spritzgießprozess. Die Korrektur von Schwindung und Verzug ist weitestgehend Routine. Anders verhält es sich bei Papieretiketten. Während die In-Mould-Etikettierung von rotationssymmetrischen Behältern keine besonderen Anforderungen hinsichtlich Verzug stellt, ist die Etikettierung von z. B. planen Deckeln oder eckigen Behältern für den Anwender, wenn überhaupt, nur schwierig zu beherrschen. Es wäre jedoch aus diversen Gründen wünschenswert, ein Papieretikett zu verwenden, zum Beispiel die Folgenden: Papieretiketten sind in Bezug auf die Kosten vorteilhaft; sie sind besser bedruckbar, insbesondere im Hinblick auf die Farbannahme und die reduzierte elektrostatische Aufladung, was Einfluss auf die Fortdruckleistung hat; Papieretiketten sind dicker, so dass der Kunststoffverbrauch reduziert werden kann; die Steifigkeit des Endprodukts wird verbessert und Papier wird aus nachwachsenden Rohstoffen hergestellt.

Papier trägt aus mehreren Gründen in besonderem Maße zum Verzug bei. Der Wärmeaustausch zwischen Schmelze und Werkzeugwand gestaltet sich durch ein einseitig eingelegtes Papieretikett asymmetrisch. Die in die Form einströmende heiße Polymerschmelze erfährt entlang der verglichen zur Metalloberfläche eher rauen und porösen Papierrückseite höhere Scherkräfte. Die zur Papieroberfläche parallel und schnell strömende Schmelze diffundiert vergleichsweise langsam in das poröse Papiergefüge. Auch durch Anpassung der jeweiligen Werkzeugwandtemperaturen oder anderer Spritzgießparameter gelingt es im Allgemeinen nicht, den Werkzeughohlraum mit teilkristallinen Thermoplasten, wie z. B. Polypropylen, so zu füllen, dass nach der Entformung kein Verzug auftritt. Vielmehr wird für die papierfreie Seite ein stärkerer Schrumpf beobachtet; die das Papieretikett tragende Seite wölbt sich folglich nach außen. Ein derartig oder anders verformtes Kunststoffspritzgießteil ist jedoch nicht einsetzbar. Im Verpackungsbereich wären Verarbeitungsprobleme beim Entstapeln, Füllen, Abpacken und Stapeln vorprogrammiert. Die Verschließbarkeit von Deckel und Behälter sowie die resultierende Dichtheit wären ebenso kritisch zu sehen. Ferner würde beim Verbraucher ein beispielsweise nach außen gewölbter Joghurtbecherdeckel den Eindruck erwecken, das Produkt wäre verdorben.

Die deutsche Offenlegungsschrift DE 26 57 753 A1 beschäftigt sich mit der Optimierung bei der Etikettierung von Kunststoffspritzgießteilen und schlägt vor, das Etikett anzusaugen und mittels Unterdruck in der Form der Maschine zu halten. Das Patent DE 101 05 699 C2 will diffusionsdichte Kunststoffbehälter schaffen, indem ein diffusionsdichtes Metallfolienetikett mit einem speziellen Zuschnitt bereitgestellt wird, welches anschließend hinterspritzt wird.

In der deutschen Offenlegungsschrift DE 10 2004 051 681 A1 werden ein Behälter aus Kunststoff mit einem Papieretikett und ein Verfahren zu seiner Herstellung beschrieben. Wie aus der Schrift zu sehen ist, handelt es sich um einen konischen Behälter, beispielsweise einen Yoghurtbecher, der mit einem Papieretikett versehen wird. Die Etikettierung von planen Behältern und Oberflächen ist dort nicht offenbart. Bei Anwendung des darin offenbarten Verfahrens für die Etikettierung von planen Geometrien ergeben sich die oben aufgeführten Probleme des Verzugs des Papieretiketts nach dem Abkühl- und Trocknungsprozess.

Das US-Patent 4,883,697 beschäftigt sich mit dem Blasformen von Behältern. Auch dort ist beschrieben, dass Papier und papierähnliche Etiketten dazu neigen, zu knittern, sich bei Anwendung des In-Mould-Etikettierverfahrens abzulösen oder zu verziehen. Die unterschiedlichen Schrumpfeigenschaften von Kunststoff und Papier werden darin ebenfalls als Ursache des Problems angesehen. Zur Lösung des Problems - die Bereitstellung einer glatten Etikettenoberfläche - schlägt dieses US-Patent ein Mehrschichtetikett aus diversen Kunststoffschichten mit jeweils unterschiedlichen Eigenschaften vor. Ein solches Mehrschichtetikett ist jedoch sehr teuer und bringt zusätzlich sämtliche Nachteile eines Kunststoffetiketts mit sich, beispielsweise die schlechtere Bedruckbarkeit.

Es wäre wünschenswert, ein Papieretikett auch auf ein planares Kunststoffteil, beispielsweise einen Deckel, aufzubringen, wobei sich das Papieretikett möglichst beim Abkühlen des Teils nach dem Spritzgießen nicht verziehen soll.

Aufgabe der vorliegenden Erfindung ist daher, ein Verfahren zur Herstellung eines mit einem Papieretikett versehenen Kunststoffspritzgießteils bereitzustellen, das die aus dem Stand der Technik bekannten Nachteile vermeidet.

Diese Aufgabe wird gelöst durch ein Verfahren nach Anspruch 1. Bevorzugte Ausgestaltungen sind Gegenstand der Unteransprüche.

Mit dem erfindungsgemäßen Verfahren ist es möglich, ein mit einem Papieretikett versehenes Kunststoffspritzgießteil zu erhalten, wobei dieses unter Verwendung des In-Mould-Verfahrens geschieht. Gemäß der Erfindung ist das in die Spritzgießform eingelegte Papieretikett feucht und wird im feuchten Zustand mit Kunststoff hinterspritzt.

Das erfindungsgemäße Verfahren eignet sich zum Etikettieren von sowohl gebogenen, beispielsweise zylindrischen und konischen, als auch von planen Oberflächen. Es stellt jedoch erstmals die Möglichkeit bereit, plane Oberflächen mit Papieretiketten zu versehen, ohne dass sich die bekannten Probleme beim Schrumpfen und das daraus folgende Verziehen des fertigen Spritzgießteils ergeben. Damit löst die Erfindung ein lange bekanntes, bis jetzt ungelöstes Problem auf dem Gebiet der Etikettierung unter Verwendung des In-Mould-Verfahrens. Die aufgeführten Vorteile beziehen sich wegen dieser lange Zeit ungelösten Problematik überwiegend auf plane Kunststoffteile wie Behälterdeckel. Dennoch wird ausdrücklich hierin offenbart, dass das Verfahren auch für andere Behälterformen wie beispielsweise quadratische oder rechteckige Becher mit ebenen Seitenwänden anwendbar ist. Das Verfahren löst die Probleme von Schwindung und Verzug und führt so zu einer den Stand der Technik übertreffenden geometrischen Übereinstimmung von Werkzeugform und Spritzling. Das Papieretikett wird dabei glatt, falten- und blasenfrei und ohne Verzerrungen mit dem Spritzgießteil verbunden sein.

Das hier beschriebene Verfahren ermöglicht insbesondere den Einsatz von Papieretiketten für die In-Mould-Etikettierung von planen Flächen, wie sie z.B. an Behälterseitenwänden oder Deckeln von Verpackungen zu finden sind, was bisher an dem problematischen Schrumpfverhalten des Verbundes aus Kunststoff und Papier häufig scheiterte. Durch Einsatz von Papier- an Stelle von Folienetiketten ergeben sich, insbesondere bei Einsatz von metallisierten Papieren, neue optische Gestaltungsmöglichkeiten. Neben der auf Papier typischerweise erzielbaren hohen Druckqualität bleibt die Oberfläche nach dem Spritzguss glatt. Der für geschäumte Folien typische Orangenhaut-Effekt tritt nicht auf. Ein Anschmelzen des Etiketts am Anschnitt des Formteils, was oft mit einer optischen Beeinträchtigung verbunden ist, bleibt aufgrund der höheren Temperaturbeständigkeit von Papier gegenüber Thermoplasten wie z.B. Polypropylen aus. Insbesondere bei metallisierten Kunststofffolien führt die Temperaturempfindlichkeit des Substrats zu einem optisch nicht akzeptablen Mattwerden des Metallspiegels. Dieses Problem kann durch Verwendung von metallisierten Papieren gelöst werden. Papier verbessert außerdem die mechanischen Wandeigenschaften durch Wechselwirkung von Polymermatrix und Papierfasergefüge und bringt Steuervorteile wegen Nutzens eines nachwachsenden Rohstoffes als Verpackungsmaterial.

Unter einem planen oder planaren Kunststoffteil wird ein solches verstanden, dessen Oberfläche zumindest stückchenweise ungewölbt ist. Beispiele hierfür sind Behälterdeckel, Teller, Koffer, Behälterböden, Bretter und Scheiben. Gemäß allgemein anerkannter Definition
bezeichnet Planarität bzw. Planizität sinngemäß die räumliche Anordnung von Punkten in einer Ebene. Es wird darauf hingewiesen, dass dies für die Anmeldung nicht streng mathematisch gilt, sondern dass mit den Begriffen "plan" bzw. "planar" die mit einem Etikett zu versehende Oberfläche eines Kunststoffspritzgießteils, z. B. eines Deckels, von einem solchen Kunststoffspritzgießteil mit gewölbter Oberfläche, z. B. den Wänden eines zylindrischen oder konischen Bechers, unterschieden wird. Es ist jedem Fachmann bekannt, dass streng planare Oberflächen gemäß der bekannten Definition in dem Anwendungsgebiet der Erfindung in der Praxis kaum vorkommen, dennoch wird man solche Oberflächen im Sinne der Erfindung als plan bzw. planar bezeichnen.

Die hier vorgestellte Erfindung erlaubt für Papier eine im IML-Verfahren bisher nicht vorhandene Übereinstimmung von Werkzeughohlraum und Form des Spritzlings. Dieser Vorteil kommt bei planen Oberflächen besonders zum Tragen, da in der Vergangenheit hier der Verzug am größten war. Mit zunehmender Krümmung der Oberfläche bzw. mit einer zunehmenden Rotationssymmetrie werden die durch Verzug auftretenden Kräfte durch die Behälterform selbst kompensiert, so dass der nach außen hin resultierende sichtbare Verzug geringer wird. Welcher Verzug dem Spritzgießer dabei noch tolerierbar erscheint und wann die Abweichung von Werkzeugform und Spritzling so hoch ist, dass durch die hier beschriebene Erfindung eine Korrektur eingeleitet werden muss, ist Ermessenssache.

Das Erzielen eines feuchten Papieretiketts in der Spritzgießform kann auf verschiedenen Wegen erfolgen. Die Feuchtigkeit kann aus Wasser oder einer wasserhaltigen Substanz stammen, welche sowohl flüssig als auch pastös sein kann. Sie kann durch direkte Übertragung, beispielsweise mittels eines nassen Schwammes, Vlieses oder Filzes erfolgen. Auch eine Übertragung durch Düsen, Benebelung oder in Form von Dampf ist denkbar. Eine Übertragung durch Penetrationsvorgänge, z. B. durch Einlegen in die Feuchtigkeit enthaltende Substanz, ist denkbar. Gemäß einer bevorzugten Ausführung der Erfindung wird als Feuchtigkeit enthaltende Substanz Wasser verwendet. Diese wird auf das Papieretikett aufgetragen, z. B. aufgesprüht. Das Wasser wird solange auf dem Papieretikett belassen, bis es in dieses eingedrungen ist, so dass das Papieretikett durchfeuchtet ist. Gegebenenfalls vorhandenes überschüssiges Wasser wird entfernt, beispielsweise abgestreift oder durch Verbringen des Papieretiketts auf eine warme Platte verdampft. Anschließend wird das Papieretikett mit Kunststoff hinterspritzt. Nach dem Abkühlen sind Kunststoffspritzgießteil und Papieretikett fest miteinander verbunden und das Etikett weist eine glatte Oberfläche ohne Verzerrungen, Wölbungen oder Faltungen auf. Es stellte sich in Versuchen als günstig heraus, wenn das aufzutragende Wasser angewärmt ist.

Die Übertragung des Wassers in das Papier hängt einerseits vom Saugverhalten des Papiers, andererseits von der Temperatur, des Druckes und der Einwirkdauer des Wassers ab. Dem Wasser können bei Bedarf Substanzen beigemischt werden, die Einfluss auf Viskosität, Oberflächenspannung, Dampfdruck und somit auf das Penetrationsverhalten haben.

Das Problem des Verzerrens von Papieretiketten bei deren Einsatz im In-Mould-Verfahren auf planen Geometrien ist seit langer Zeit ungelöst. Das In-Mould-Verfahren ist seit ca. 20 Jahren im Einsatz zum Aufbringen von Etiketten, in diesem Fall vor allem Papieretiketten, auf Kunststoffteile. Bisher waren nur konische und zylindrische Kunststoffteile mit einem Papieretikett im In-Mould-Verfahren verwendbar. Sämtliche zuvor durchgeführten Versuche, beispielsweise durch die Verwendung von speziellen Lacken auf der Rückseite des Papieretikettes, mit diversen Papiersorten und Grammaturen, mit speziellen Prägeverfahren oder mit unterschiedlichen Papier-Kunststoffkaschierungen erwiesen sich als nicht zielführend. Überraschend ergab sich nun, dass durch den Einsatz eines feuchten Papieretikettes beim Aufbringen von Papieretiketten auf plane Geometrien mittels des In-Mould-Verfahrens die seit 20 Jahren ungelösten Probleme beseitigt werden. Es stellte sich in Versuchen heraus, dass das Verfahren unabhängig von der Papiersorte ist; bei allen bis jetzt durch die Erfinder getesteten Papieren erwies sich das erfindungsgemäße Verfahren als anwendbar.

Der Feuchtigkeitsgehalt des feuchten Papieretikettes hängt von diversen Faktoren, u. a. auch von der Papiersorte ab. Ein genauer Zahlenwert kann deshalb nicht angegeben werden. Der Feuchtigkeitsgehalt liegt jedoch bevorzugt im Bereich von 8 bis 35 Gew.-%. Für einen Fachmann wird es jedoch unproblematisch sein, den für das jeweilige Papieretikett günstigen Durchfeuchtungsgehalt festzustellen und dementsprechend die Anlagen einzustellen. Es zeigte sich, dass das Etikett zwar durchfeuchtet sein soll, dass jedoch überschüssiges Wasser auf der Etikettenoberfläche entfernt werden sollte, um in Hinblick auf die optischen Eigenschaften ein ideales Ergebnis zu erzielen, da Wasserüberstand auf dem Papieretikett unter Umständen zu Schlierenbildung im Kunststoff führen kann. Es ließe sich folglich zwar ein glattes Etikettenbild im fertigen Kunststoffspritzgießteil erzielen, allerdings wäre unter Umständen das Kunststoffteil mit leichten optischen Defekten versehen. Es zeigte sich, dass der Feuchtigkeitsgehalt des durchfeuchteten Papieretiketts insbesondere dann günstig ist, wenn das feuchte Etikett vor dem Hinterspritzen mit Kunststoff seine Rolleigenschaft verloren hat und somit wieder plan liegt.

Wie oben angedeutet, kann die Feuchtigkeit enthaltende Substanz auf diversen Wegen auf das Papieretikett aufgetragen werden. Tauchverfahren, Sprühverfahren, mechanische Auftrag- und Abstreifverfahren sind beispielsweise einsetzbar. Denkbar wäre auch, beim industriellen Papierherstellungsprozess Etikettenpapiere mit höherem, geeigneten Feuchtegehalt herzustellen und bereitzustellen. Die Befeuchtung des Etiketts kann somit auf verschiedenen Ebenen geschehen; bereits bei der Herstellung des Papiers, vor oder beim Druckvorgang, vor dem Einlegen in die Spritzgießmaschine, d. h. zwischen Drucken und Spritzgießen, oder in der Kavität der Spritzgießmaschine.

Papier enthält zwischen 3 und 8 Gew.-% Wasser, üblicherweise zwischen 4 und 6 Gew.-%. Die Fähigkeit eines Papiers, innerhalb von 60 Sekunden eine weitere Menge an Wasser aufzunehmen, wird über den Cobb₆₀-Wert quantifiziert. Für Etikettenpapiere liegt dieser Wert zwischen 5 und 45 g/m², meist zwischen 10 und 25 g/m². Für das hier beschriebene Verfahren ist jedoch relevant, dass das Papier bzw. das Substrat Wasser bzw. eine Flüssigkeit aufnehmen kann.

Eckige Behälter und insbesondere plane Formen wie Deckel, die nach der In-Mould-Etikettierung mit Papier einen starken Verzug aufweisen, können ohne Verzug produziert werden, indem die Papieretiketten vor dem Spritzgießen mit Wasser gefeuchtet werden. Bei Eintrag eines Wasserüberschusses wurden keine Abweichungen von der erwarteten Behältergeometrie beobachtet. Allerdings sollten freie Wassertropfen auf der Papierrückseite entfernt werden, um streifigen Glanzverlust der Behälterwandung zu vermeiden.

Spritzgießversuche wurden vor allem mit einseitig gestrichenen Etikettenpapieren durchgeführt. Gute Ergebnisse wurden nach einer Auffeuchtung von einer typischen Ausgangsfeuchte von 4,5 - 6,5 Gew.-% auf 15 - 25 Gew.-% erzielt, wobei 20 Gew.-% Gewichtsprozent am geeignetsten erscheinen. Der Eintrag von Wasser führte bei aluminiumbedampften Papieren ebenso zu guten Ergebnissen wie bei weißen gestrichenen, ungestrichenen oder gussgestrichenen Papieren.

Die Funktion des eingetragenen Wassers könnte zunächst auf eine Quellung der Papierfasern zurückgeführt werden. Die hohen Temperaturen der thermoplastischen Schmelze treiben das Wasser wieder aus, um so einen Schrumpf zu erzeugen, der den stärkeren Schrumpf der etikettenfreien Seite kompensiert.

Um im Etikettenspender eine fehlerfreie Etikettenvereinzelung zu gewährleisten, hat es sich als günstig erwiesen, die Etikettenbefeuchtung unmittelbar dem Einlegen in das Spritzgießwerkzeug vorzuschalten. Die Art der Wasserübertragung in das Papier ist hinsichtlich des Verzugs ohne Bedeutung. Vielmehr muss der Feuchtungsprozess in Einklang mit Taktzeit und räumlichen Gegebenheiten an der Spritzgießmaschine gestaltet werden. Als günstig erwies sich eine Wasserübertragung über feine Zerstäuberdüsen, nasse Schwämme oder Ähnliches. Auf der Papierrückseite anhängende Wassertröpfchen können mittels Druck und Temperatur in das Papiergefüge gepresst oder beispielsweise über ein saugendes Vlies entfernt werden.

Im Folgenden seien drei konkrete Ausführungsbeispiele der Erfindung schematisch beschrieben.

### 1. Ausführungsbeispiel

Schritt 1: Die bedruckten Etiketten werden vor dem Einlegen in die Spritzgießform mit Wasser besprüht.
Schritt 2: Überschüssiges Wasser wird entfernt.
Schritt 3: Nach dem Eindringen des Wassers, wobei in der Regel die Zeit, die für die vorstehenden Schritte benötigt wird, ausreichend ist, wird das Etikett in die Spritzgießkavität eingelegt.
Schritt 4: Hinterspritzen des Etiketts mit Kunststoff.
Schritt 5: Abkühlen und Entnehmen des Kunststoffspritzgießteils mit Etikett.

Zwischen den Schritten 1 und 2 kann noch der folgende Schritt eingefügt sein: Das benässte Etikett wird gegen seine Rollneigung in Form gehalten. Ferner kann vorgesehen sein, dass das Wasser, mit dem das Etikett befeuchtet wird, angewärmt ist, beispielsweise auf eine Temperatur von 20-80 °C.

### 2. Ausführungsbeispiel

In einem Behälter wird Dampf erzeugt. Papieretiketten werden in Kontakt mit Öffnungen des Dampfbehälters gebracht, so dass der Dampf aus dem Behälter in das Etikett gelangen kann. Zur Beschleunigung kann der Dampf mit Druck beaufschlagt werden. Nachdem der Dampf in das Etikett eingedrungen ist, wird es in die Kavität der Spritzgießmaschine eingelegt und mit Kunststoff hinterspritzt.

### 3. Ausführungsbeispiel:

Das Etikett wird rückseitig so lange gegen ein feuchtes, heißes Vlies gepresst, bis es etwa 20 Gew.-% an Wasser aufgenommen hat.

Diese Ausführung könnte auch direkt in der Kavität der Spritzgießmaschine durch eine Zusatz-Dampferzeugungsausrüstung durchgeführt werden.

Statt einzeln können die Etiketten auch im Druckprozess bzw. nach der Konfektionierung im 1000-er Stapel auf die erforderliche Feuchte gebracht werden.

## Patentansprüche

1. Verfahren zur Herstellung eines mit einem Papieretikett versehenen Kunststoffspritzgießteils, wobei das In-Mould-Verfahren angewendet wird,
**dadurch gekennzeichnet, dass**
das in eine Spritzgießform eingelegte Papieretikett feucht ist und im feuchten Zustand mit Kunststoff hinterspritzt wird.

2. Verfahren nach Anspruch 1, **dadurch gekennzeichnet, dass** eine Feuchtigkeit enthaltende Substanz auf das Papieretikett aufgetragen wird.

3. Verfahren nach Anspruch 2, **dadurch gekennzeichnet, dass** die Feuchtigkeit enthaltende Substanz solange auf dem Papieretikett verbleibt, bis das Papieretikett Feuchtigkeit aufgenommen hat und durchfeuchtet ist.

4. Verfahren nach Anspruch 2 oder 3, **dadurch gekennzeichnet, dass** die Feuchtigkeit enthaltende Substanz aufgesprüht oder mit einem Verteilgerät, z. B. einem Schaber, aufgetragen wird oder dass das Papieretikett in die Feuchtigkeit enthaltende Substanz getaucht wird.

5. Verfahren nach einem der Ansprüche 2 bis 4, **dadurch gekennzeichnet, dass** die Feuchtigkeit enthaltende Substanz Wasser oder eine wasserhaltige Substanz, insbesondere Flüssigkeit oder pastöse Substanz, ist.

6. Verfahren nach einem der Ansprüche 2 bis 5, **dadurch gekennzeichnet, dass** die Feuchtigkeit enthaltende Substanz angewärmt oder als Dampf aufgetragen wird.

7. Verfahren nach einem der vorstehenden Ansprüche, **dadurch gekennzeichnet, dass** es die folgenden Schritte aufweist:
a) eine Feuchtigkeit enthaltende Substanz wird auf das Papieretikett aufgetragen,
b) die Feuchtigkeit enthaltende Substanz wird solange auf dem Papieretikett belassen, bis es durchfeuchtet ist,
c) überschüssige Feuchtigkeit enthaltende Substanz wird von dem Papieretikett entfernt, und d) das Papieretikett wird mit Kunststoff hinterspritzt.

8. Verfahren nach Anspruch 7, **dadurch gekennzeichnet, dass** das Entfernen der überschüssigen Feuchtigkeit enthaltenden Substanz mit Hilfe von Wärme erfolgt, insbesondere durch Verbringen des feuchten Papieretiketts auf eine Wärmequelle.

9. Verfahren nach Anspruch 7, **dadurch gekennzeichnet, dass** das Entfernen der überschüssigen Feuchtigkeit enthaltenden Substanz mechanisch, insbesondere mit einem

10. Verfahren nach einem der vorstehenden Ansprüche, **dadurch gekennzeichnet, dass** das Papieretikett im Etikettenstapel vor dem Einlegen in die Spritzgießform angefeuchtet wird.

11. Verfahren nach einem der vorstehenden Ansprüche, **dadurch gekennzeichnet, dass** das Papieretikett in der Spritzgießform, unmittelbar vor dem Hinterspritzen mit Kunststoff angefeuchtet wird.

12. Verfahren nach einem der vorstehenden Ansprüche, **dadurch gekennzeichnet, dass** das Kunststoffteil ein flaches, planes Kunststoffteil ist, insbesondere ein Behälterdeckel, Teller, Koffer, Behälterboden, Brett, Scheibe ist

13. Verfahren nach einem der vorstehenden Ansprüche, **dadurch gekennzeichnet, dass** das Papieretikett im feuchten Zustand einen Feuchtigkeitsgehalt von 8 - 35 Gew.-% hat.

14. Verfahren nach einem der vorstehenden Ansprüche, **dadurch gekennzeichnet, dass** das feuchte Papieretikett vor dem Hinterspritzen mit Kunststoff seine Rolleigenschaft verloren hat und somit wieder plan liegt.
